## Europäisches Patentamt
## European Patent Office
## Office européen des brevets

(19)

(11) Numéro de publication: **0 070 761 B1**

(12) **FASCICULE DE BREVET EUROPEEN**

(45) Date de publication du fascicule du brevet:
**10.12.86**

(21) Numéro de dépôt: **82401276.9**

(22) Date de dépôt: **06.07.82**

(51) Int. Cl.⁴: **G 11 B 7/007**, G 11 B 7/095 //
G11B7/125

(54) Dispositif optique d'enregistrement-lecture sur support d'information prégravé.

(30) Priorité: **17.07.81 FR 8113979**

(43) Date de publication de la demande:
**26.01.83 Bulletin 83/4**

(45) Mention de la délivrance du brevet:
**10.12.86 Bulletin 86/50**

(84) Etats contractants désignés:
**DE GB IT NL SE**

(56) Documents cités:
**EP - A - 0 033 046**
**EP - A - 0 038 499**
**DE - B - 2 048 431**
**FR - A - 2 217 761**
**FR - A - 2 365 854**
**GB - A - 2 064 847**
**GB - A - 2 084 786**
**US - A - 4 176 377**

**PATENTS ABSTRACTS OF JAPAN, vol.5, no.88, 9 juin
1981, (P-65) (760)**

(73) Titulaire: **THOMSON-CSF, 173, Boulevard Haussmann,
F-75379 Paris Cedex 08 (FR)**

(72) Inventeur: **Bricot, Claude, THOMSON-CSF SCPI 173, bld
Haussmann, F-75379 Paris Cedex 08 (FR)**

(74) Mandataire: **Weinmiller, Jürgen et al, Lennéstrasse 9,
D-8133 Feldafing (DE)**

## Description

La présente invention se rapporte aux dispositifs optiques permettant d'inscrire de l'information selon une piste prégravée à la surface d'un support en forme de disque. L'inscription de l'information s'effectue au moyen d'un faisceau de rayonnement modulé optiquement qui projette à la surface du disque un spot de dimensions réduites. La piste prégravée se décompose en spires concentriques dont l'écartement est tel que le spot ne puisse éclairer qu'une seule spire. Dans le document FR-A-2 217 761 est décrit un corps porteur d'enregistrement muni d'une piste à suivre pouvant être réalisée sous la forme d'un sillon obtenu par pressage. Cette piste peut être suivie à l'aide d'une tache de rayonnement, qui est plus grande que la largeur de cette piste. Le document Patent Abstracts of Japan, volume 5, n° 88, 9 juin 1981, page 73P65 (JP-A-5 634 154) décrit un disque optique comportant un support perméable au rayonnement inscripteur avec des sillons dont les flancs servent de support à une couche photosensible et de moyens délimitateurs d'une piste à suivre. L'utilisation de sillons permet de réduire la conduction thermique entre la couche photosensible et son support. En focalisant avec un objectif un rayonnement laser, on obtient un spot ayant des dimensions de l'ordre du micron, ce qui permet d'obtenir une forte densité de puissance pour l'inscription de l'information et, grâce au resserrement des spires, un stockage à haute densité. Le document US-A-4 176 377 fait référence à un vidéodisque enregistrable avec un faisceau laser projetant un spot de diamètre inférieur au micron. Du fait de la finesse du spot, les propriétés optiques de la surface prégravée sont en grande partie dépendantes des phénomènes de diffraction. Ainsi, lorsqu'on éclaire une plage lisse du disque, le renvoi de lumière ou la transmission de lumière s'effectuent dans un angle solide qui correspond à l'ouverture angulaire du faisceau d'éclairage. En captant la lumière qui émerge d'une plage lisse éclairée, on peut observer dans un plan de détection un maximum d'éclairement. Par contre, si le spot éclaire une plage de disque comportant une irrégularité de surface, l'angle solide dans lequel émerge le rayonnement réfléchi ou transmis peut être plus ouvert que l'ouverture angulaire du faisceau d'éclairage. La détection d'une irrégularité de surface peut se traduire par un assombrissement, car une partie du rayonnement émergent n'est pas recueilli par le système détecteur.

Dans le cas des dispositifs optiques d'enregistrement-lecture mettant en œuvre un support d'information prégravé, on adopte pour la prégravure un relief de surface comportant un niveau bas et un niveau haut. Une coupe méridienne du disque prégravé présente une alternance de creux et de saillies définissant deux réseaux imbriqués, l'un renfermant les éléments de piste, l'autre les interpistes. Les interpistes encadrant un élément de piste forment une structure que le spot doit suivre en restant le mieux possible centré sur la piste. A cet effet, un asservissement radial est prévu, afin de tendre à annuler tout écart de suivi. Le système de détection doit être en mesure d'établir une nette distinction entre la piste et les deux interpistes qui l'encadrent. Cette distinction est basée sur un contraste d'intensité qui ne dépend pas du sens du relief, mais des dimensions radiales données aux irrégularités de surface par rapport à la dimension du spot d'éclairement. La gravure de l'information a généralement pour effet de modifier les caractéristiques optiques de la piste, mais cette modification peut entraîner un fonctionnement défectueux du système de détection des écarts de suivi de piste.

En vue de pallier cet inconvénient, l'invention prévoit un dimensionnement particulier de la structure prégravée produisant dans des conditions d'éclairement prédéterminées une accentuation du contraste entre piste et prépistes du fait de l'inscription de l'information.

L'invention a pour objet un système optique comprenant un dispositif optique d'enregistrement-lecture d'information et un support d'information en forme de disque porteur d'une prégravure formant un relief dans une surface de référence dudit support d'information; ladite prégravure comportant des éléments de piste adjacents alternant avec des éléments d'interpiste, ledit dispositif comportant des moyens d'éclairement destinés à fournir un spot n'éclairant qu'un seul élément de piste à la fois, des moyens recueillant un rayonnement émergeant de la zone du support d'information explorée par ledit spot, afin de détecter un écart de suivi dudit spot par rapport audit élément de piste et des moyens astreignant ledit spot à suivre ledit élément de piste; ledit spot empiètant sur les éléments d'interpiste qui encadrent l'élément de piste sur lequel il est centré, afin que la lecture fasse intervenir un premier degré d'assombrissement, caractérisé en ce que, mesuré transversalement, le rapport de largeur piste-interpiste diffère de l'unité pour créer un contraste de prégravure par l'écart entre ledit premier degré d'assombrissement et un second degré d'assombrissement lié à une autre valeur d'empiètement dudit spot lorsqu'il est centré sur un élément d'interpiste; la postgravure dudit disque avec un rayonnement inscripteur renforçant ledit contraste de prégravure.

L'invention sera mieux comprise au moyen de la description ci-après et des figures annexées parmi lesquelles:

La figure 1 est une vue isométrique partielle d'un dispositif d'enregistrement-lecture selon l'invention.

Les figures 2 à 4 sont des figures explicatives.

La figure 5 représente des caractéristiques de détection d'un écart de suivi radial.

La figure 6 représente en coupe méridienne une structure de disque fonctionnant par ablation thermique.

La figure 7 représente en coupe méridienne une autre structure de disque fonctionnant par ablation thermique.

La figure 8 représente en coupe méridienne une structure de disque fonctionnant également par ablation.

La figure 9 est une figure explicative.

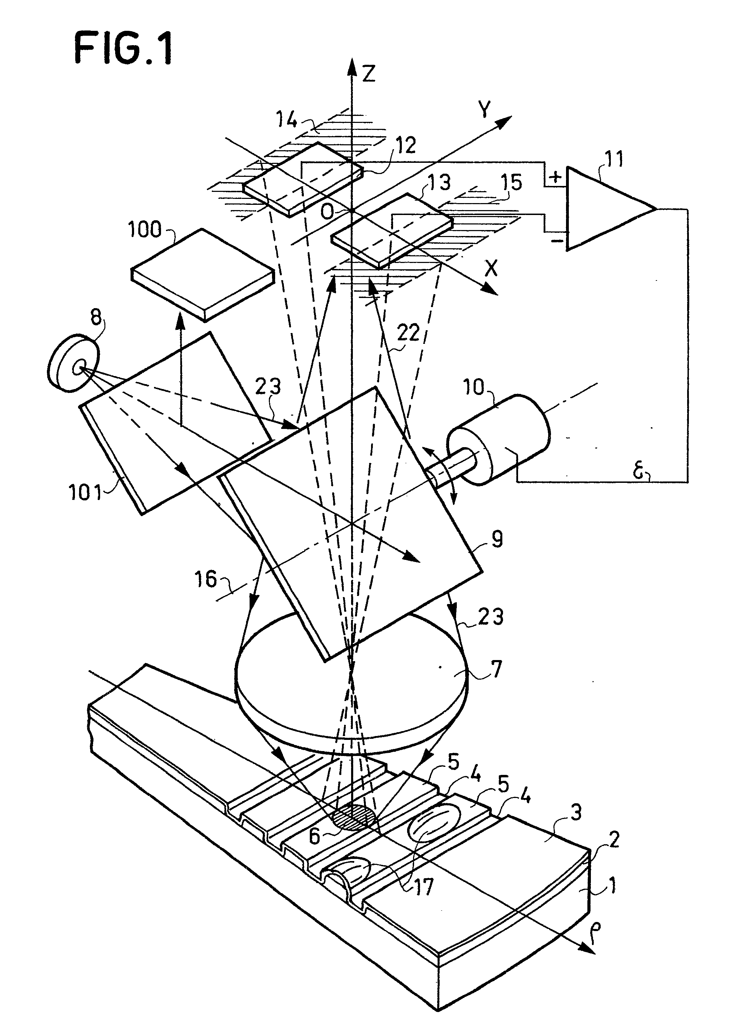

Sur la figure 1 on peut voir, ramené à l'essentiel, un dispositif optique d'enregistrement-lecture d'information sur disque. Un fragment de disque inscriptible par voie thermooptique a été dessiné à échelle fortement exagérée. Il s'agit plus précisément d'une structure comprenant un support 1 porteur d'une sous-couche 2 en matériau thermodégradable dans laquelle on a formé en creux des sillons 4 de prégravure qui séparent entre elles plusieurs plages annulaires 5 formant des éléments de piste. La sous-couche 2 est recouverte d'une mince couche métallique 3 qui peut se déformer plastiquement sous l'effet d'un rayonnement inscripteur pour former un chapelet d'irrégularités de surface 17 constituant la postgravure du disque.

Avant d'être soumis à l'action d'un rayonnement inscripteur, les éléments de piste 5 sont lisses tout comme les creux 4 qui constituent les interpistes. En pratique, les éléments de piste 5 sont agencés selon des cercles concentriques équidistants ou suivant les spires successives d'une spirale. Une disposition analogue est adoptée pour les interpistes.

L'inscription et la lecture d'information sur un tel disque nécessite la projection d'un spot lumineux 6. A cet effet, une source de rayonnement 8 émet un faisceau lumineux 23 qui, après avoir traversé la lame semi-transparente 101, est renvoyé par un miroir 9 en direction de la pupille d'un objectif de projection 7. Ce faisceau 23 est focalisé par l'objectif 7 à la surface 3 du disque. On peut déplacer radialement le spot 6 le long du rayon $\rho$ en faisant pivoter le miroir 9 autour de l'axe 10. Un moteur 10 assure la commande de déplacement radial du spot 6. L'exploration des éléments de piste 5 s'obtient en faisant tourner le disque 1, 2, 3 autour d'un axe parallèle à l'axe optique Z de l'objectif 7. Cependant, l'excentricité des éléments de piste nécessite un pilotage radial du spot 6 pour s'assurer de son centrage sur la piste. Ce pilotage suppose que l'on détecte tout écart $\Delta\rho$ du centre du spot 6 par rapport à l'axe de la piste. A cet effet, on peut prévoir un système de détection d'écart de suivi radial. Sur la figure 1, ce système détecteur est symbolisé par le bloc 100. Le bloc 100 reçoit le rayonnement qui émerge de la zone du disque éclairée par le spot 6. Ce rayonnement est repris par l'objectif 7 et renvoyé vers le bloc 100 via le miroir 9 et la lame 101. Pour rendre la figure 1 plus claire, on a représenté le retour inverse de la lumière comme s'il n'y avait pas les éléments réflecteurs 9 et 101. Cette façon de procéder permet d'illustrer le long de l'axe optique Z un plan de détection XY qui en fait est situé à l'intérieur du bloc 100. Dans ce plan de détection, on a représenté par deux bandes hachurées 14 et 15 les images des deux interpistes 4 qui encadrent l'élément de piste 5 sur lequel est projeté le spot 6. Le point 0 du plan de détection XY est conjugué optiquement avec le centre d'émission de la source 8 via l'objectif 7 et les trois éléments réflecteurs que sont la couche 3, la lame 101 et le miroir 9. Les images 14 et 15 des interpistes se déplacent donc selon l'axe X lorsque le spot 6 se déplace selon le rayon $\rho$. Il en résulte qu'un écart radial de suivi peut être détecté en plaçant dans le plan de détection deux éléments photodétecteurs 12 et 13. Les tensions électriques délivrées par les éléments photodétecteurs 12 et 13 sont appliquées aux deux entrées d'un circuit comparateur 11 qui fournit un signal différentiel $\varepsilon$. Le signal $\varepsilon$ est appliqué au moteur 10 afin de compenser par asservissement l'écart de suivi détecté. Le senseur de suivi de piste qui vient d'être décrit n'est pas le seul qui puisse entrer en ligne de compte; on pourrait également faire appel à un senseur à wobbulation du spot ou de la piste ainsi qu'à un senseur à double spot.

Le point important à examiner est le contraste d'amplitude que l'on obtient dans le plan de détection XY.

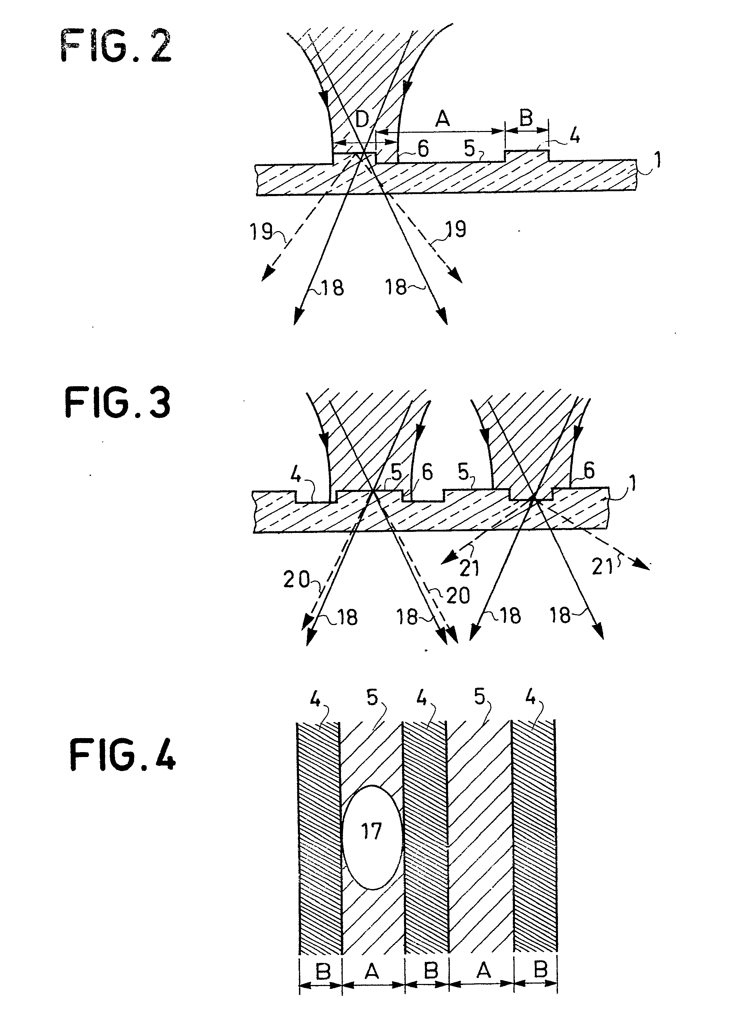

On a représenté sur la figure 2 une coupe méridienne d'un disque 1 prégravé. On peut obtenir ce type d'empreinte en partant d'une matrice sur laquelle on étale un matériau photopolymérisable que l'on recouvre avec un disque support transparent. Après insolation, on obtient un disque prégravé. Les largeurs A et B mesurées radialement représentent respectivement la largeur d'une piste 5 et celle d'une interpiste 4. Le faisceau d'éclairage du disque est la zone de confinement hachurée sur la figure 2; sa base correspond au spot 6 qui présente un diamètre D. Les rayons 18 sont des rayons marginaux qui définissent l'ouverture angulaire du faisceau d'éclairage. Lorsque le spot éclaire un interpiste 4 de largeur B inférieur à son diamètre D, l'effet de diffraction fait que les rayons qui émergent du disque s'épanouissent dans un angle solide délimité par les rayons marginaux 19. Le système détecteur qui recueille le rayonnement issu d'un interpiste 4 verra cet élément sous la forme d'une bande plus sombre que ce qu'il aurait vu en l'absence de relief. Lorsque le spot 6 est positionné au milieu de la piste 5 et si $A > D$, on voit qu'aucun effet de diffraction n'intervient de sorte que le système de détection voit la piste 5 plus claire que l'interpiste 4. On obtient donc un bon contraste d'amplitude entre la piste 5 et l'interpiste 4. Cependant, il faut signaler que la disposition adoptée sur la figure 2 est défectueuse en ce qui concerne la connaissance complète de l'écart de suivi du spot 6 par rapport à la piste 5. En effet, comme A est supérieure à D, il existe une plage d'étendue $A - D$ pour laquelle le signal d'écartométrie reste nul.

En pratique, il faut donc adopter la disposition représentée à la figure 3. On voit que le spot 6 centré sur un élément de piste 5 empiète légèrement sur les interpistes 4 qui l'encadrent et que le spot 6 centré sur un interpiste 4 empiète plus fortement sur les éléments de piste 5 qui l'encadrent. Cette disposition peut se décrire mathématiquement comme suit:

$$D > A;\ D > B;\ D - A < D - B$$

En ce qui concerne le diamètre D du spot d'éclairage 6, il faut se rappeler qu'il existe deux possibilités de définition. En supposant que la pupille de l'objectif reçoit un éclairement uniforme, le spot est constitué par le disque d'AIRY dont le diamètre d est donné par la formule:

$$d = \frac{1,22\,\lambda}{\sin u}$$

où $\lambda$ est la longueur d'onde
et sin u l'ouverture numérique de l'objectif.

On peut également considérer que la répartition de l'éclairement est gaussienne dans l'étendue de la pupille de l'objectif. Le diamètre du spot pour le même objectif et la même longueur d'onde est alors 15% plus grand que le diamètre donné par la formule rappelée ci-dessus. La conséquence du choix qui vient d'être défini est que le rayonnement qui émerge d'un élément de piste 5 est contenu dans un angle solide 20–20 légèrement plus ouvert que l'angle d'ouverture du faisceau 18–18, alors que le rayonnement qui émerge d'un interpiste 4 est contenu dans un angle solide 21–21 nettement plus ouvert.

La figure 4 est une illustration des éclairements reçus dans le plan de détection XY de la figure 1. Les interpistes 4 apparaissent plus sombres que les éléments de piste 5, ce qui procure un contraste pour détecter l'écart de suivi au moyen des photodétecteurs 14 et 15.

Il reste à préciser que les figures 2 et 3 représentent un disque prégravé sur lequel aucune information n'a été gravée. Si, comme le montre la figure 1, le spot 6 a créé sur un élément de piste des irrégularités de surface 17 représentant la gravure proprement dite, celle-ci peut donner lieu à un éclaircissement local de l'élément de piste comme illustré sur la figure 4 ou l'effet inverse. Dans l'hypothèse d'une couche enregistrable donnant l'effet inverse, il faudrait assombrir la tache 17 par rapport à l'élément de piste 5, ce qui ferait perdre du contraste.

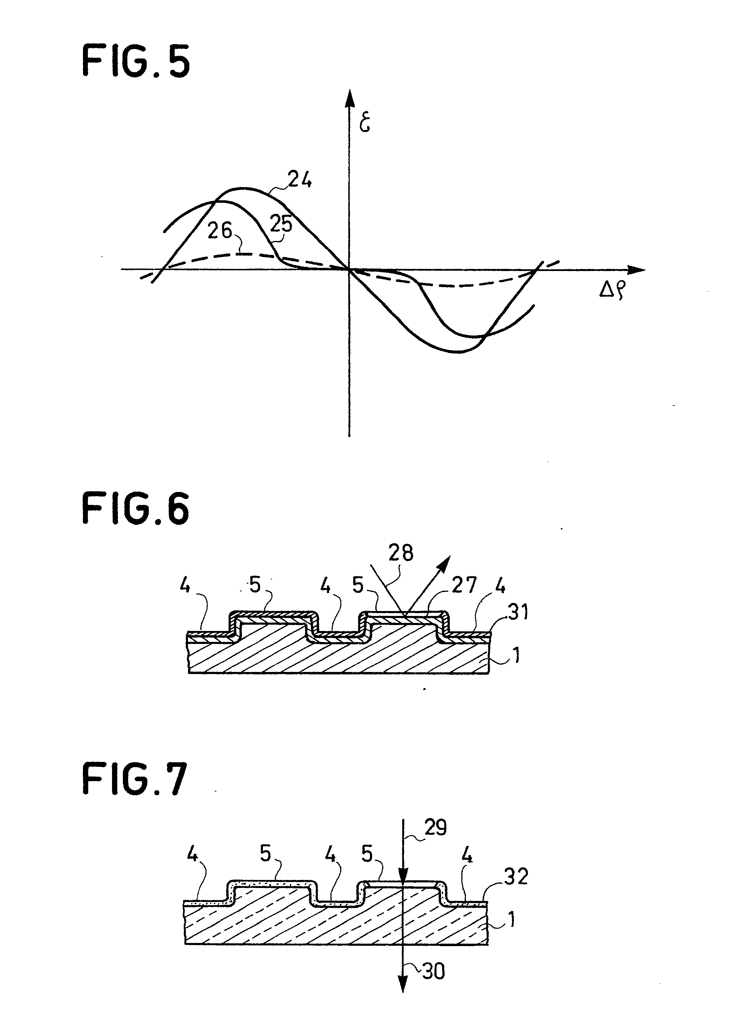

On voit sur la figure 5 un diagramme donnant en fonction de l'écart de suivi $\Delta\rho$ la valeur prise par le signal d'erreur disponible à la sortie du comparateur 11. La courbe de discrimination 24 est celle que l'on observe avant gravure du disque. La courbe 25 concerne une prégravure dont l'une des largeurs A ou B est supérieure au diamètre D du spot. La courbe 26 représente une perte sensible de sensibilité due à une gravure qui assombrit l'élément de piste. Si l'assombrissement dû à la gravure est plus important, on peut même observer une inversion de phase qui rend le suivi de piste instable.

On voit donc qu'il faut choisir la prégravure en fonction de l'effet de la gravure. Plus précisément, on peut dire que la gravure doit renforcer le contraste piste-interpiste, car ainsi on est assuré de conserver un fonctionnement stable du suivi de piste. A cela il faut ajouter que le spot doit au moins légèrement empiéter sur les interpistes d'encadrement pour que l'asservissement agisse même lorsque l'écart de suivi est minime.

La couche enregistrable de la figure 1 est une couche dont la déformation thermooptique entraîne un relèvement du pouvoir réflecteur. Avec la configuration de prégravure de la figure 3, on obtient le résultat illustré sur la figure 4, c'est-à-dire un renforcement du contraste.

A titre d'exemple non limitatif, on peut réaliser un disque prégravé constitué d'interpistes en creux d'une largeur de 0,6 micron encadrant des éléments de piste en saillie larges de 1,4 micron. Une couche enregistrable composée d'un film métallique mince déposé sur une sous-couche d'un matériau dégradable à basse température épouse le relief de la prégravure. Avant inscription, la couche métallique adhère à la sous-couche et l'ensemble est dimensionné de façon à faiblement réfléchir un rayonnement incident de longueur d'onde $\lambda = 0,6328$ micron. Ce rayonnement provient d'un laser et il est focalisé sur le disque au moyen d'un objectif d'ouverture numérique N.A. = 0,45. Le spot projeté sur la couche enregistrable a un diamètre de 1,7 micron, ce qui fait paraître l'élément de piste un peu plus sombre qu'une partie lisse de la couche; les interpistes paraissent sensiblement plus sombres, ce qui assure un bon contraste de lecture de la prégravure. Lors de l'inscription, le décollement localisé du film métallique par un dégagement gazeux provenant de la sous-couche provoque une augmentation du pouvoir réflecteur de la couche, ce qui amène un renforcement du contraste de lecture. L'inscription qui vient d'être décrite n'entraîne aucune déchirure du film métallique, car il subit une déformation plastique en deçà de la charge de rupture.

L'invention n'est pas limitée à l'exemple qui vient d'être donné.

On voit sur la figure 6 une coupe méridienne de disque prégravé dans lequel le relief de prégravure porté par le substrat 1 a été recouvert d'une sous-couche à pouvoir réflecteur élevé sur laquelle un film 31 de moindre réflectivité a été déposé. Le film 31 est réalisé dans un matériau qui se volatilise lorsqu'on lui applique localement le rayonnement laser inscripteur. La figure 6 montre à gauche un élément de piste 5 à l'état vierge et à droite un élément de piste 5 qui a subi l'ablation thermooptique. Dans ce cas, la sous-couche 27 est mise à nu par l'ouverture locale du film 31 et lorsque la détection de l'écart de suivi a lieu par réflexion du rayonnement d'éclairage 28, on obtient à nouveau un renforcement du contraste piste-interpiste.

L'invention s'applique également à la détection du rayonnement transmis par le disque. La coupe méridienne de la figure 7 représente un support 1 en matériau transparent qui a reçu une prégravure et sur laquelle on a déposé un film 32 semi-transparent et thermodégradable. L'élément de piste 5 représenté à gauche est à l'état vierge et l'élément de piste 5 situé à droite a subi une ablation par le rayonnement d'éclairage 29. L'intensité du rayonnement transmis 30 est accrue par la gravure, ce qui tend à renforcer le contraste de la prégravure.

Dans les exemples qui précèdent, on voit que l'élément de piste est en saillie et qu'il est de largeur plus importante que l'interpiste, c'est ce que l'on appelle la prégravure à piste «blanche».

La situation complémentaire entre également dans le cadre de l'invention.

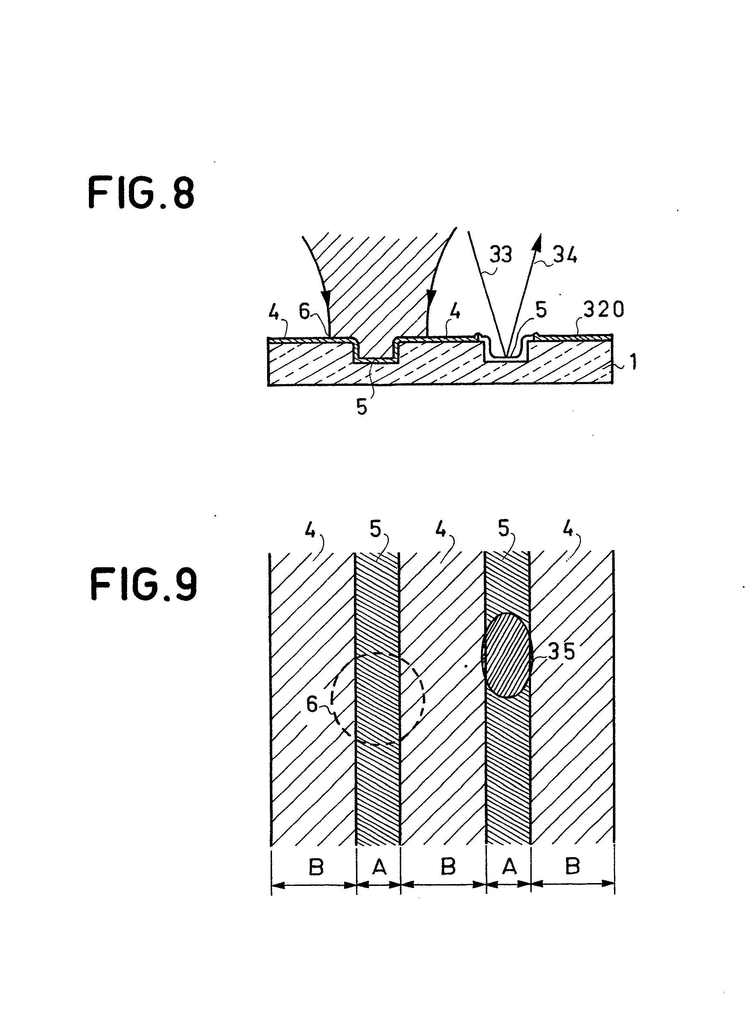

La coupe méridienne de la figure 8 représente un support 1 dont la prégravure est formée d'éléments de piste 5 en creux séparés par des interpistes 4 en saillie. Le support 1 qui peut être transparent est recouvert d'un film 320 inscriptible par ablation thermo-optique. Le faisceau d'éclairage fournit un spot 6 de diamètre légèrement supérieur à la largeur des interpistes 4. Les éléments de piste 5 sont plus étroits que les interpistes 4, ce qui permet d'obtenir le contraste de prégravure illustré sur la figure 9. Ce contraste est celui que l'on observe avec un système de détection qui utilise le rayonnement réfléchi 34 qui est renvoyé par le disque lorsqu'il reçoit le rayonnement d'éclairage 33. L'élément de piste 5 représenté à gauche sur la figure 8 est à l'état vierge et il apparaît à la figure 9 sous la forme d'une bande sombre encadrée par des plages plus claires correspondant aux interpistes 4. L'élément de piste 5 représenté à droite sur la figure 8 a subi une ablation thermooptique locale qui diminue le pouvoir réflecteur du disque. Cette ablation correspond sur la figure 9 à une plage 35 plus sombre que la piste 5. On voit donc que la gravure renforce le contraste de prégravure puisque la démarcation entre élément de piste et interpiste est encore plus nette.

D'après ce qui précède, on voit que le sens d'un relief de prégravure a peu d'importance, mais que le rapport de largeur doit différer de l'unité dans un sens qui corresponde à un contraste renforcé lorsque l'on grave l'information sur la piste. Il est également nécessaire de prévoir un empiètement du spot sur les deux interpistes qui bordent un élément de piste, car le suivi de piste ne doit pas comporter de zone morte. Enfin, il va sans dire que le spot ne doit éclairer qu'un élément de piste à la fois pour éviter toute diaphotie et concentrer le mieux possible le rayonnement inscripteur. L'invention s'applique à tout système de couche enregistrable avec ou sans ablation; on peut envisager des surfaces d'enregistrement multicouches aussi bien que monocouche. Il y a lieu de noter que la prégravure peut comporter sur les éléments de pistes des irrégularités de surface similaires aux signaux de gravure; de telles irrégularités permettent de réaliser un adressage des éléments de piste et aussi de subdiviser en secteurs chaque spire de la zone annulaire réservée à l'enregistrement de données.

## Revendications

1. Système optique comprenant un dispositif optique d'enregistrement-lecture d'information et un support d'information en forme de disque (1) porteur d'une prégravure formant un relief dans une surface de référence dudit support d'information; ladite prégravure comportant des éléments de piste (5) adjacents alternant avec des éléments d'interpiste (4), ledit dispositif comportant des moyens d'éclairement destinés à fournir un spot (6) n'éclairant qu'un seul élément de piste à la fois, des moyens (100) recueillant un rayonnement émergeant de la zone du support d'information explorée par ledit spot, afin de détecter un écart de suivi dudit spot par rapport audit élément de piste et des moyens (9, 10) astreignant ledit spot à suivre ledit élément de piste; ledit spot empiétant sur les éléments d'interpiste (4) qui encadrent l'élément de piste (5) sur lequel il est centré, afin que la lecture fasse intervenir un premier degré d'assombrissement, caractérisé en ce que, mesuré transversalement, le rapport de largeur piste-interpiste diffère de l'unité pour créer un contraste de prégravure par l'écart entre ledit premier degré d'assombrissement et un second degré d'assombrissement lié à une autre valeur d'empiètement dudit spot lorsqu'il est centré sur un élément d'interpiste (4); la postgravure dudit disque avec un rayonnement inscripteur renforçant ledit contraste de prégravure.

2. Système optique selon la revendication 1, caractérisé en ce que la largeur desdits éléments de piste (5) est supérieure à la largeur desdits éléments d'interpiste (4).

3. Système optique selon la revendication 1, caractérisé en ce que la largeur desdits éléments de piste (5) est inférieure à la largeur desdits éléments d'interpiste (4).

4. Système optique selon la revendication 2, caractérisé en ce que ledit disque comporte une couche enregistrable se déformant sans déchirure au cours du processus d'inscription; ladite déformation entraînant un accroissement de pouvoir réflecteur.

5. Système optique selon la revendication 2, caractérisé en ce que ledit disque comporte une couche enregistrable qui comprend un film déposé sur une sous-couche réflectrice; le processus d'enregistrement provoquant l'ablation dudit film de façon à obtenir un accroissement du pouvoir réflecteur de ladite couche.

6. Système optique selon la revendication 2, caractérisé en ce que ledit disque étant perméable au rayonnement d'éclairage (29), une couche enregistrable transmet auxdits moyens détecteurs (100) un rayonnement (30); le processus d'enregistrement provoquant l'ablation d'un film semi-transparent (32) de manière à augmenter le pouvoir de transmission dudit disque.

7. Système optique selon la revendication 3, caractérisé en ce que ledit disque comporte une couche enregistrable sous la forme d'un film (320) réflecteur; le processus d'enregistrement provoquant l'ablation dudit film de façon à obtenir une diminution du pouvoir réflecteur dudit disque.

8. Système optique selon l'une quelconque des revendications 1 à 7, caractérisé en ce que ledit spot (6) est un disque d'AIRY.

9. Système optique selon l'une quelconque des revendications 1 à 7, caractérisé en ce que ledit spot est une tache lumineuse résultant d'une distribution gaussienne dans la pupille de l'objectif de focalisation.

10. Système optique selon la revendication 1, caractérisé en ce que les éléments de pistes sont jalonnés d'irrégularités de surface similaires à celles produites par la postgravure.

11. Système optique selon la revendication 1, caractérisé en ce que lesdites irrégularités de surface sont des moyens d'adressage.

12. Système optique selon l'une quelconque des revendications 1 à 11, caractérisé en ce que ledit support a une prégravure revêtue d'au moins une couche optiquement enregistrable.

13. Système optique selon l'une quelconque des revendications précédentes, caractérisé en ce que ledit dispositif est muni de moyens senseurs de suivi de piste à wobbulation.

14. Système optique selon la revendication 13, caractérisé en ce que lesdits senseurs mettent en œuvre la wobbulation dudit spot.

15. Système optique selon la revendication 13, caractérisé en ce que lesdits moyens senseurs mettent en œuvre une wobbulation desdits éléments de piste.

## Claims

1. An optical system comprising an optical information recording and playback device and a disk-shaped information carrier (1) having a pregraving embossed in a reference surface of said carrier, said pregraving comprising adjacent track elements (5) alternating with intertrack elements (4), said device comprising illumination means conceived to supply a spot (6) which at any moment only illuminates one track element, means (100) detecting anirradiation emerging from the information carrier zone explored by said spot in order to detect a divergence of said spot with respect to said track element, and means (9, 10) urging said spot to follow said track element, said spot overlapping on the intertrack elements (4) bordering the track element (5) to which the spot is centered, such that a first degreee of reduced irradiation is measured, characterized in that the ratio between the transversal width of a track and that of the intertrack differs from the value one in order to create a pregraving contrast by the difference between said first degree of reduced irradiation and a second degree of reduced irradiation associated to a further value of spot overlapping if the latter is centered on an intertrack element (4), the postgraving of said disk with a write-in irradiation increasing said contrast due to the pregraving.

2. An optical system according to claim 1, characterized in that the width of said track elements (5) is greater than that of said intertrack elements (4).

3. An optical system according to claim 1, characterized in that the width of said track elements (5) is smaller than that of said intertrack elements (4).

4. An optical system according to claim 2, characterized in that said disk comprises a recordable layer which is deformed without tearing during the recording process, said deformation causing an increase of the reflectivity power.

5. An optical system according to claim 2, characterized in that said disk comprises a recordable layer which includes a film deposited on a reflective sublayer, the recording process causing the ablation of said film in such a manner as to obtain an increase of the reflectivity power of said layer.

6. An optical system according to claim 2, characterized in that said disk being permeable to the illumination irradiation (29), a recordable layer transmits an irradiation (30) to said detector means (100), the recording process causing the ablation of a semitransparent film (32) in such a manner as to obtain an increase of the transmissivity power of said disk.

7. An optical system according to claim 3, characterized in that the recordable layer of said disk is constituted by a reflective film (320), the recording process causing the ablation of said film in such a manner as to obtain a reduction of the reflectivity power of said disk.

8. An optical system according to any one of claims 1 to 7, characterized in that said spot (6) is an AIRY-disk.

9. An optical system according to any one of claims 1 to 7, characterized in that said spot is a lightspot resulting from a Gaussian distribution in the area of the focalisation objective.

10. An optical system according to claim 1, characterized in that the track elements are provided with surface irregularities similar to that produced by the postgraving.

11. An optical system according to claim 10, characterized in that said surface irregularities are addressing means.

12. An optical system according to any one of claims 1 to 11, characterized in that said carrier has a pregraving which is covered with at least one optically recordable layer.

13. An optical system according to any one of the preceding claims, characterized in that said device disposes of sensor means for following a track using a wobbulation technique.

14. An optical system according to claim 13, characterized in that said sensor means submit the spot to the wobbulation.

15. An optical system according to claim 13, characterized in that said sensor means submit the track elements to a wobbulation.

## Patentansprüche

1. Optisches System mit einer optischen Schreib-Lesevorrichtung für Informationen und mit einem scheibenförmigen Informationsträger (1), der eine reliefartige Vorgravur in einer Bezugsfläche des Informationsträgers besitzt, wobei diese Vorgravur nebeneinanderliegend Spurelemente (5) im Wechsel mit Zwischenspurelementen (4) enthält und die optische Vorrichtung Beleuchtungsmittel, die zur Lieferung eines jeweils nur ein Spurelement beleuchtenden Lichtpunkts (6) bestimmt sind, Mittel (100), die eine von der durch den Lichtpunkt abgetasteten Zone des Informationsträgers ausgehende Strahlung empfangen, um eine Nachführungsabweichung des Lichtpunkts bezüglich des Spurelements zu erkennen, und Mittel (9, 10) aufweist, die den Lichtpunkt veranlassen, dem Spurelement zu folgen, wobei der Lichtpunkt auf die Zwischenspurelemente (4) übergreift, die das Spurelement (5) einrahmen, auf das der Lichtpunkt zentriert ist, so dass sich beim Auslesen ein erster Abschattungsgrad ergibt, dadurch gekennzeichnet, dass in Querrichtung gemessen, das Verhältnis der Breite des Spurelements zu der des Zwischenspurelements vom Wert eins abweicht, um einen Vorgravur-Kontrast durch den Unterschied zwischen dem ersten Abschattungsgrad und einem zweiten Abschattungsgrad zu erzeugen, der mit einem anderen Übergriffswert des Lichtpunkts verbunden ist, wenn dieser auf ein Zwischenspurelement (4) zentriert ist, wobei die Nachgravur der Scheibe mit einer Schreibstrahlung den Vorgravur-Kontrast erhöht.

2. Optisches System nach Anspruch 1, dadurch gekennzeichnet, dass die Breite der Spurelemente (5) grösser als die Breite der Zwischenspurelemente (4) ist.

3. Optisches System nach Anspruch 1, dadurch gekennzeichnet, dass die Breite der Spurelemente (5) geringer als die Breite der Zwischenspurelemente (4) ist.

4. Optisches System nach Anspruch 2, dadurch gekennzeichnet, dass die Scheibe eine beschreibbare Schicht enthält, die sich während des Schreibvorgangs verformt, ohne zu zerreissen, wobei diese Verformung eine Erhöhung des Reflektionsfaktors erbringt.

5. Optisches System nach Anspruch 2, dadurch gekennzeichnet, dass die Scheibe eine beschreibbare Schicht aufweist, die einen auf eine reflektierende Unterlageschicht aufgebrachten Film enthält, wobei der Schreibvorgang eine Abnahme dieses Films hervorruft, so dass eine Erhöhung des Reflektionsfaktors der Schicht erreicht wird.

6. Optisches System nach Anspruch 2, dadurch gekennzeichnet, dass die Scheibe für die Beleuchtungsstrahlung (29) durchlässig ist und dass eine beschreibbare Schicht an die Mittel (100) zum Empfang der Strahlung eine Strahlung (30) überträgt, wobei der Schreibvorgang die Abnahme eines halbtransparenten Films (32) hervorruft, so dass der Transmissionsfaktor der Scheibe zunimmt.

7. Optisches System nach Anspruch 3, dadurch gekennzeichnet, dass die Scheibe eine beschreibbare Schicht in Form eines reflektierenden Films (320) enthält, wobei der Schreibvorgang die Abnahme des Films hervorruft, so dass sich eine Verringerung des Reflektionsfaktors der Scheibe ergibt.

8. Optisches System nach einem beliebigen der Ansprüche 1 bis 7, dadurch gekennzeichnet, dass der Lichtpunkt (6) eine AIRY-Scheibe ist.

9. Optisches System nach einem beliebigen der Ansprüche 1 bis 7, dadurch gekennzeichnet, dass der Lichtpunkt ein Leuchtfleck ist, der aus einer Gauss'schen Verteilung in der Pupille des Fokalisationsobjektivs resultiert.

10. Optisches System nach Anspruch 1, dadurch gekennzeichnet, dass die Spurelemente mit Unregelmässigkeiten in der Oberfläche versehen sind, die ähnlich denen sind, die durch die Nachgravur erzeugt werden.

11. Optisches System nach Anspruch 10, dadurch gekennzeichnet, dass die Oberflächen-Unregelmässigkeiten Adressiermittel sind.

12. Optisches System nach einem beliebigen der Ansprüche 1 bis 11, dadurch gekennzeichnet, dass der Träger eine Vorgravur besitzt, die mit mindestens einer optisch beschreibbaren Schicht bedeckt ist.

13. Optisches System nach einem beliebigen der vorhergehenden Ansprüche, dadurch gekennzeichnet, dass die Vorrichtung mit Sensormitteln zur Spurverfolgung nach Art einer Wobbelung versehen ist.

14. Optisches System nach Anspruch 13, dadurch gekennzeichnet, dass die Sensormittel die Wobbelung des Lichtpunkts bewirken.

15. Optisches System nach Anspruch 13, dadurch gekennzeichnet, dass die Sensormittel eine Wobbelung der Spurelemente bewirken.

# FIG.1

**FIG. 2**

**FIG. 3**

**FIG. 4**

# FIG.5

# FIG.6

# FIG.7

# FIG.8

# FIG.9